(19) **Europäisches Patentamt**

**European Patent Office**

**Office européen des brevets**

(11) **EP 0 635 413 B1**

(12) **EUROPÄISCHE PATENTSCHRIFT**

(45) Veröffentlichungstag und Bekanntmachung des Hinweises auf die Patenterteilung:
**05.03.1997 Patentblatt 1997/10**

(51) Int. Cl.$^6$: **B60T 1/08**

(21) Anmeldenummer: **94109960.8**

(22) Anmeldetag: **28.06.1994**

(54) **Zahnräderwechselgetriebe für Kraftfahrzeuge mit einer Dauerbremse (Sekundärretarder)**

Gear change box for vehicles with retarder (secondary retarder)

Boîte de vitesse pour véhicules avec ralentisseur (ralentisseur secondaire)

(84) Benannte Vertragsstaaten:
**FR GB IT SE**

(30) Priorität: **21.07.1993 DE 4324460**

(43) Veröffentlichungstag der Anmeldung:
**25.01.1995 Patentblatt 1995/04**

(73) Patentinhaber: **MERCEDES-BENZ AG**
**70327 Stuttgart (DE)**

(72) Erfinder:
• **Köllermeyer, Albrecht**
**D-71566 Althütte (DE)**
• **Schnitzer, Detlef**
**D-73770 Denkendorf (DE)**

(56) Entgegenhaltungen:
**DE-A- 1 780 591**

**Beschreibung**

Die Erfindung bezieht sich auf ein Zahnräderwechselgetriebe nach dem Oberbegriff von Patentanspruch 1.

Bei einem bekannten Zahnräderwechselgetriebe der eingangs genannten Art (DE 38 37 142 A1) sind die Bremsdrehachse der Dauerbremse und die Zentralachse des Planetengetriebes des Nebenabtriebes koaxial zur Vorgelegewelle eines Einbereichsgetriebes angeordnet, wobei der Planetenträger über eine Zahnradstufe als Bestandteil des Nebenabtriebes von der zur Vorgelegewelle parallelen Hauptwelle angetrieben ist, welche in diesem Falle die Ausgangswelle des Zahnräderwechselgetriebes ist. Der Nebenabtrieb mit dem ausgangsseitigen Zahnrad seiner Zahnradstufe, das Planetengetriebe des Nebenabtriebes wie auch die Dauerbremse, für die eine hydrodynamische Bremse (Retarder) verwendet ist, sind in einem besonderen Statorgehäuse aufgenommen, welches am ausgangsseitigen unteren Gehäuseendbereich des Getriebegehäuses des Zahnräderwechselgetriebes vorgesehen ist. Hierdurch ist der erforderliche Freigang bei Verwendung des Zahnräderwechselgetriebes für den Antrieb eines Vierachsfahrzeuges eingeschränkt sowie die Möglichkeit verbaut, retarderunabhängige Nebenabtriebe hinten am Getriebegehäuse anbringen zu können.

Diese Nachteile weist auch ein bekanntes Zahnräderwechselgetriebe anderer Art (DE 35 36 928 A1) auf, das als Mehrbereichsgetriebe ein Planetenräder-Gruppengetriebe aufweist, bei dem das innere Zentralrad mit der Eingangswelle und der Planetenträger mit der Ausgangswelle des Zahnräderwechselgetriebes verbunden sind, während das äußere Zentralrad über eine Wechselschaltvorrichtung entweder gegenüber der Ausgangswelle oder gegenüber dem Getriebegehäuse undrehbar festlegbar ist. Die Bremsdrehachse der Dauerbremse mit der zugehörigen koaxialen Antriebswelle sind parallel zur Ausgangswelle angeordnet und in einem besonderen Gehäuse aufgenommen, das an den hinteren unteren Gehäuseendteil des Getriebegehäuses des Zahnräderwechselgetriebes angesetzt ist. Ein Planetengetriebe weist der Nebenabtrieb für die Dauerbremse bei diesem bekannten Zahnräderwechselgetriebe nicht auf.

Bei einem weiteren bekannten Zahnräderwechselgetriebe anderer Art (GB-A 21 09 488) für ein Kraftfahrzeug mit einem als Dauerbremse einsetzbaren Primärretarder ist im Kraftfluß zwischen einem Antriebsmotor und einem Hauptgetriebe ein Vorschaltgetriebe angeordnet. Das Vorschaltgetriebe besteht aus einem zweigängigen Planetengetriebe und einem hydrodynamischen Primärretarder, wobei die bauliche Anordnung so getroffen ist, daß die Abtriebswelle des Antriebsmotores und die Hauptdrehachse des Planetengetriebes sowie die Bremsdrehachse des Primärretarders jeweils koaxial zur Eingangswelle des Hauptgetriebes liegen. Der Planetenträger ist mit der zentralen Ausgangswelle des Vorschaltgetriebes drehfest und mit der Abtriebswelle des Antriebsmotores durch eine ein- und ausrückbare Durchtriebskupplung verbunden. Das äußere Zentralrad des Planetengetriebes ist durch eine ein- und ausrückbare Gangkupplung mit der Abtriebswelle des Antriebsmotores verbunden und durch eine ein- und ausrückbare Gangbremse festbremsbar. Das innere Zentralrad ist mit einer Hohlwelle drehfest verbunden, welche - von der Ausgangswelle des Vorschaltgetriebes durchsetzt - sowohl mit einer ein- und ausrückbaren Gangbremse als auch mit dem Rotor des Primärretarders verbunden ist. Der Primärretarder hat eine Doppelfunktion. In der Anfahrphase aus dem Fahrzeugstillstand heraus ist lediglich die das äußere Zentralrad mit der Abtriebswelle des Antriebsmotors verbindende Gangkupplung eingerückt, so daß der Primärretarder als Reaktionsbremse auf das hierbei als Getriebereaktion verwendete innere Zentralrad in einem zum Drehsinn der Abtriebswelle des Antriebsmotores gegenläufigen Drehsinn arbeitet. Im Schiebebetrieb des Kraftfahrzeuges kann das äußere Zentralrad durch Ausrücken seiner Gangkupplung von dem Antriebsmotor getrennt und durch Einrücken seiner Gangbremse festgebremst werden. In diesem Dauerbremsbetrieb wird der Rotor durch das Planetengetriebe vom Hauptgetriebe her ins Schnelle angetrieben, und zwar in einem zum Drehsinn der Abtriebswelle des Antriebsmotores gleichsinnigen Drehsinn. Nachteilig ist hierbei, daß die Rotordrehzahl vom eingelegten Gang des Hauptgetriebes abhängig ist, und daß der Wirkungsgrad des Rotors für den Dauerbremsbetrieb schlecht ist, weil die Beschaufelung gleichermaßen für die gegenläufige Bremswirkung bei ihrer Verwendung als Reaktionsbremse in der Anfahrphase ausgelegt sein muß.

Aus der DE 41 40 979 A1 ist eine gattungsfremde Antriebseinrichtung eines Fahrzeuges bekannt, die mit einem hydrostatisch-mechanischen Leistungsverzweigungsgetriebe zwischen Antriebsmotor und Achsantriebsstrang mit einem mindestens vierwelligen Planetendifferential mit mindestens zwei Reihen von Planetenrädern, zwei Sonnenrädern, einem Steg und einem Hohlrad, ferner mit zwei den Eingang bzw. Ausgang bildenden und jeweils an verschiedenen Wellen des Planetendifferentials angeschlossenen Hauptwellen und mit mindestens zwei Hydrostatmaschinen versehen ist, die jeweils in mindestens einem Betriebsbereich an einer eigenen Welle des Planetendifferentials angeschlossen sind und wechselweise als Pumpe oder Motor arbeiten, wobei mindestens eine der Hydrostatmaschinen bei zumindest annähernd stillstehender anderer Hydrostatmaschine beim Übergang vom einen in den anderen Betriebsbereich über wenigstens eine schaltbare Kupplung von der ausgangsseitigen Hauptwelle zum nichtantriebsseitigen Sonnenrad umschaltbar ist und im Zugbetrieb von Motor- auf Pumpenfunktion wechselt. Diese bekannte Antriebsanordnung soll sich von einem herkömmlichen hydrodynamischen Primär-Retarder unterscheiden, weil ein solcher Primär-Retarder ca. 40 kg wiege und einen zusätzlichen Einbauraum, insbesondere in Längsrichtung erfordere. Für den Antrieb des Retarders stünde dann eine relativ niedrige Drehzahl in der Größenordnung bis ca. 2000 l/min zur Verfügung. Außerdem sei ein solcher Primär-Retarder vergleichsweise teuer. Bei der bekannten Antriebseinrichtung wurde daher angestrebt, einen Retarder zuzuordnen, der die Nachteile eines Retarders konventioneller Bauart und Anordnung vermeidet. Zu diesem Zweck ist bei dieser bekannten Antriebseinrichtung an der Welle des nichtantriebsseitigen Sonnenrades der Rotor eines hydrodynamischen Retarders angeschlossen bzw. über eine Kupplung anschließbar. Diese Lösung soll auf dem Wissen basieren, daß an der Welle des nichtantriebseitigen Sonnenrades des Leistungsverzweigungsgetriebes eine wesentlich höhere Drehzahl als an Ein- oder Ausgangswelle des Leistungsverzweigungsgetriebes zur Verfügung stehe. Dieser Retarder könne direkt in das Gehäuse des Leistungsverzweigungsgetriebes oder räumlich davor zwischen diesem und der Brennkraftmaschine einbaubar sein.

Aus der DE-A 1 780 591 ist eine Anordnung eines hydrodynamischen Bremsgeräts an einer ein Schaltgetriebe und einen Föttingerwandler mit umlaufendem Gehäuse enthaltenden Kraftübertragung eines Antriebsblocks für Fahrzeuge, insbesondere Nutzfahrzeuge bekannt. In dieser Druckschrift werden im Zusammenhang mit einer solchen Anordnung folgende Schwierigkeiten gesehen. Bei derartigen Bremsgeräten wächst die Bremsleistung mit der 5ten Potenz ihres Durchmessers. Für kleine Abmessungen der Schaufeln des Bremsgeräts derart, daß diese innerhalb der Konturen der Kraftübertragung leicht unterzubringen sind, ist daher ein großer Durchmesser des Bremsgeräts erwünscht.

Bremsgeräte dieser Art pflegen so angeordnet zu werden, daß ihre Abmessungen innerhalb der äußeren Abmessungen des Schaltgetriebes bleiben. Damit ist aber der wirksame Durchmesser des Bremsgeräts beschränkt, und die Abmessungen der Schaufeln desselben werden relativ groß, sodaß sie eine fühlbare Verlängerung der Kraftübertragung bedingen. Außerdem ist ein Antrieb des Bremsgeräts mittels der Abtriebswelle des Antriebsblocks üblich, aber unvorteilhaft, weil das Bremsgerät dann viel größer gebaut werden muß als es werden müßte, wenn sein Antrieb ihm bei niederer Abtriebswellendrehzahl eine erhöhte Drehzahl verleihen würde. Ein so großes Bremsgerät erzeugt außerdem ungefüllt hohe, oft unzulässig hohe Ventilationsverluste im direkten Gang bei hoher Drehzahl, wenn es groß genug ist, um bei niederer Drehzahl hinreichend zu bremsen.

Um Regeln zur wenigstens teilweisen, möglichst vollständigen Behebung dieser Schwierigkeiten anzugeben, ist bei der bekannten Anordnung vorgesehen, daß der Läufer des Bremsgeräts von hinreichend großem Durchmesser ist, um sich in die äußeren Konturen bzw. Abmessungen des den Föttingerwandler umgebenden Gehäuses einzupassen und (oder) daß er von einem Drehteil der Kraftübertragung angetrieben wird, der entweder im großen Vorwärtsgang stillsteht oder ständig die Drehzahl des umlaufenden Gehäuses des Föttingerwandlers hat.

Die der Erfindung zugrunde liegende Aufgabe besteht im wesentlichen darin, ein Mehrbereichsgetriebe mit einer Dauerbremse zu schaffen, bei dem die Dauerbremse sowohl gangunabhängig als auch gegenüber der Drehzahl der Ausgangswelle ins Schnelle angetrieben ist und durch ihre Anordnung die Verwendung bremsunabhängiger Nebenabtriebe nicht stört.

Die erläuterte Aufgabe ist gemäß der Erfindung in vorteilhafter Weise mit den Merkmalen von Patentanspruch 1 gelöst.

Bei dem Zahnräderwechselgetriebe nach der Erfindung ist zwischen dem Planetenträger des Zusatz-Getriebes und der Hauptwelle des Grundgetriebes ein Sekundärretarder angeordnet, der über einen Planetensatz ins Schnelle übersetzt wird. Der Sekundärretarder kann in einem Gehäusemittelteil des Getriebegehäuses angeordnet sein, der auch das Grundgetriebe aufnimmt. Der Nebenabtrieb für diesen Sekundärretarder erfolgt über einen Planetensatz, der durch den Planetenträger des Zusatz-Getriebes, welcher mit der Ausgangswelle verbunden ist, mit Gelenkwellendrehzahl angetrieben ist. Der Rotor des Sekundärretarders kann mit dem äußeren Zentralrad des Planetengetriebes des Nebenabtriebes verbunden sein. Der Stator des Sekundärretarders und das innere Zentralrad des Planetengetriebes sind hierbei miteinander verbunden und gehäusefest. Somit ergibt sich ein Übersetzungsverhältnis von $i = 1 +$ (Zähnezahl des inneren Zentralrades)/(Zähnezahl des äußeren Zentralrades). Es läßt sich bei einem baulichen Ausführungsbeispiel ein Übersetzungsverhältnis von $i \cong 1{,}4$ ins Schnelle realisieren. Es ist jedoch auch eine andere Anordnung derart ausführbar, daß das äußere Zentralrad gehäusefest angeordnet und der Rotor des Sekundärretarders mit dem inneren Zentralrad verbunden ist. Das Übersetzungsverhältnis ergibt sich jetzt zu $i = 1 +$ (Zähnezahl des äußeren Zentralrades)/(Zähnezahl des inneren Zentralrades). Es läßt sich bei einem baulichen Ausführungsbeispiel ein Übersetzungsverhältnis von $i \cong 3{,}5$ ins Schnelle erreichen.

Die Ölbefüllung des Sekundärretarders kann mit dem Öl aus dem Schmierölkreislauf des Zahnräderwechselgetriebes über Kanäle des Gehäusemittelteiles erfolgen.

Bei dem Zahnräderwechselgetriebe nach der Erfindung ist weiterhin eine kompakte Bauweise und genügender Freigang für sämtliche Nebenabtriebe und Vierachsfahrzeuge erreicht, wobei die kompakte Bauweise auch zu einem Gewichtsvorteil führt. Das Bremsmoment des Sekundärretarders ist durch seinen Antrieb von der Ausgangswelle her naturgemäß unabhängig vom eingelegten Gang.

Es ist auch möglich, die Dauerbremse ohne Hochtrieb zu betreiben.

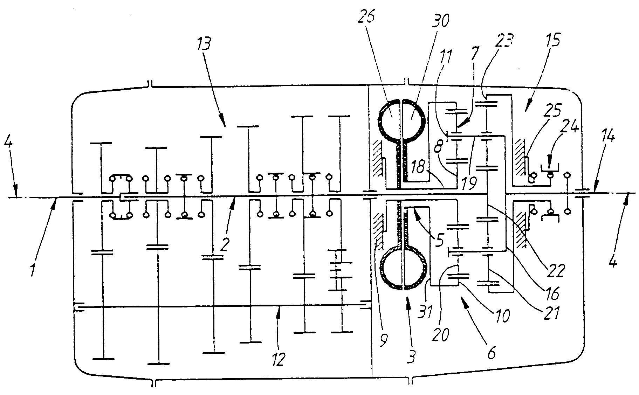

Einzelheiten der Erfindung ergeben sich aus der nachstehenden Beschreibung eines in der Zeichnung schematisch dargestellten Ausführungsbeispieles.

Ein Zahnräderwechselgetriebe der Mehrbereichsart besteht im wesentlichen aus einem Grundgetriebe 13 mit einer von einem Antriebsmotor her antreibbaren Eingangswelle 1, einer den Getriebeabtrieb des Grundgetriebes bildenden Hauptwelle 2 und einer Vorgelegewelle 12. Aufbau und Wirkungsweise eines derartigen Vorgelegegetriebes sind bekannt, so daß auf eine diesbezügliche zeichnerische Darstellung verzichtet werden kann. Im Kraftfluß zwischen der Hauptwelle 2 des Grundgetriebes 13 und einer koaxialen Ausgangswelle 14 des Zahnräderwechselgetriebes, welche in bekannter Weise mit wenigstens einer antreibbaren Fahrzeugachse in Antriebsverbindung bringbar ist, liegt ein Zusatz-Getriebe 15 der Planetenräderbauart, bei dem der Planetenträger 16 mit der Ausgangswelle 14 einteilig ausgebildet ist, das innere Zentralrad 22 mit der Hauptwelle 2 drehfest verbunden ist und das äußere Zahnrad 23 durch eine Wechselschaltvorrichtung 24 entweder gegenüber der Ausgangswelle 14 oder gegenüber einem gehäusefesten Bremsring 25 jeweils undrehbar festlegbar ist.

In baulicher Hinsicht liegt axial zwischen dem Grundgetriebe 13 und dem Zusatz-Getriebe 15 eine Dauerbremse, in diesem Falle ein sogenannter Sekundärretarder 3 der hydrodynamischen Art, wobei die Bremsdrehachse des Sekundärretarders 3, die Drehachse der Hauptwelle 2, die Zentralachse des Zusatz-Getriebes 15 sowie die Drehachse der Ausgangswelle 14 jeweils koaxial zu einer geometrischen Achse 4-4 ausgerichtet sind.

Das Gehäuse 28 des Sekundärretarders 3 ist zweigeteilt. Mit der einen Gehäusehälfte 27 ist der Stator 26 einteilig ausgebildet, wobei diese Gehäusehälfte bewegungsfest in einem Aggregathäuse 9 gehaltert ist, welches seinerseits in einem Gehäusemittelteil des Getriebegehäuses des Zahnräderwechselgetriebes feststehend gehaltert ist. Die mit der ersten Gehäusehälfte 27 bewegungsfest und flüssigkeitsdicht verbundene zweite Gehäusehälfte 29 umschließt den Rotor 30, welcher mit einer zur Achse 4-4 zentrischen Hohlwelle 5 einteilig ausgebildet ist, welche demnach die Antriebswelle der Dauerbremse darstellt.

Die Antriebswelle 5 des Sekundärretarders 3 ist durch einen Nebenabtrieb 6 mit einem Planetengetriebe 7 von der Ausgangswelle 14 angetrieben. Zu diesem Zweck ist folgende Anordnung getroffen:

Eine feststehende Hohlwelle 18 ist zentrisch zur Achse 4-4 und konzentrisch zwischen der Hauptwelle 2 und der Antriebswelle 5 angeordnet. Das innere Zentralrad 8 des Planetengetriebes 7 ist mit der Hohlwelle 18 einteilig ausgebildet, die ihrerseits an der ringförmigen Gehäusehälfte 27 undrehbar festgelegt ist. Die Antriebswelle 5 ist mit einem im Querschnitt L-förmigen Antriebssteg 31 bewegungsfest verbunden, welcher mit dem äußeren Zentralrad 10 des Planetengetriebes 7 einteilig ausgebildet ist. Die Zentralräder 8 und 10 kämmen mit Planetenrädern 20, welche gemeinsam mit Planetenrädern 21, welche zu dem Zusatz-Getriebe 15 gehören und mit den Zentralrädern 22 und 23 kämmen, nebeneinander auf Lagerbolzen 19 drehbar gelagert sind, welche jeweils an ihrem einen Bolzenende an einem ringförmigen Planetenträger 11 des Planetengetriebes 7 und an ihrem anderen Bolzenende an dem flanschartigen Planetenträger 16 des Zusatz-Getriebes 15 bewegungsfest fixiert sind. Der Planetenträger 16 weist in Umfangsrichtung zwischen den Planeten liegende Querstege auf, an deren Stirnenden der Planetenträger 11 angeschweißt ist.

## Patentansprüche

1. Zahnräderwechselgetriebe der Vorgelegebauart für Kraftfahrzeuge mit einer zu einer Eingangswelle (1) koaxialen Hauptwelle (2) und einer Dauerbremse (3), deren zentrisch zur Bremsdrehachse (4-4) liegende Antriebswelle (5)mit der Hauptwelle (2) über einen Nebenabtrieb (6) mit einem Planetengetriebe (7) in Antriebsverbindung steht, und bei dem von dem Planetengetriebe (7) des Nebenabtriebes (6) das eine Zentralrad (8) mit dem nichtdrehenden Gehäuse (9) und das andere Zentralrad (10) mit der Antriebswelle (5) der Dauerbremse (3) verbunden sind sowie der Planetenträger (11) mit der Hauptwelle (2) in Antriebsverbindung steht,
**dadurch gekennzeichnet**,
daß die Bremsdrehachse (4-4) koaxial zur Drehachse (4-4) der Hauptwelle (2) liegt und die Dauerbremse (3) zusammen mit dem Planetengetriebe (7) des Nebenabtriebes (6) baulich zwischen einem die Eingangswelle (1) als Getriebeeingang, wenigstens eine Vorgelegewelle (12) und die Hauptwelle (2) als Getriebeausgang aufweisenden Grundgetriebe (13) einerseits und einem im Kraftfluß in Reihe zwischen der Hauptwelle (2) und einer zur letzteren koaxialen Ausgangswelle (14) liegenden Zusatz-Getriebe (15) der Planetenräderbauart andererseits angeordnet ist, daß zwischen dem Planetenträger (11) des Planetengetriebes (7) des Nebenabtriebes (6) und dem Planetenträger (16) des Zusatz-Getriebes (15) eine drehfeste Antriebsverbindung (19) vorgesehen ist, und daß eine von der Hauptwelle (2) durchsetzte Hohlwelle (5 oder 18) als Verbindung zwischen einem Zentralrad (10 oder 8) des Planetengetriebes (7) des Nebenabtriebes (6) und der Dauerbremse (3) verwendet ist.

2. Zahnräderwechselgetriebe nach Anspruch 1,
**dadurch gekennzeichnet,**
daß die Planetenträger (11 und 16) des Nebenabtriebes (6) und des Zusatz-Getriebes (15) gemeinsame Lagerbolzen (19) aufweisen, auf denen die jeweils zugehörigen Planeten (20 und 21) nebeneinander angeordnet sind.

## Claims

1. A transmission-type gearbox for motor vehicles, having a main shaft (2) coaxial with an input shaft (1) and a continuous brake (3), the drive shaft (5) of which, lying concentric with the brake rotation axis (4-4), is linked during operation to the main shaft (2) by means of an auxiliary output (6) having a planetary gear (7), and in which one central gear-wheel (8) of the planetary gear (7) of the auxiliary output (6) is connected to the non-rotating housing (9) whilst the other central gear-wheel (10) is connected to the drive shaft (5) of the continuous brake (3) and the planet carrier (11) is connected to the main shaft (2) during operation,
**characterised in that**
the brake rotation axis (4-4) is coaxial with the rotation axis (4-4) of the main shaft (2) and the continuous brake (3), together with the planetary gear (7) of the auxiliary output (6), is designed to be arranged between a primary gear (13) on the one hand, for which the input shaft (1) serves as the gear input whilst at least one counter-shaft (12) and the main shaft (2) act as the gear output, and an auxiliary gear (15) of planetary gear design on the other hand, which is positioned sequentially in the power train between the main shaft (2) and the output shaft (14) coaxial with the latter, a rotating drive link (19) is provided between the planet carrier (11) of the planetary gear (7) of the auxiliary output (6) and the planet carrier (16) of the auxiliary gear (15), and a hollow shaft (5 or 18) through which the main shaft (2) passes is used as a link between a central gear-wheel (8 or 10) of the planetary gear (7) of the auxiliary output (6) and the continuous brake (3).

2. A gear box as claimed in claim 1,
**characterised in that**
the planet carriers (11 and 16) of the secondary output (6) and the auxiliary gear (15) have common axle stubs (19), on which the respective associated planets (20 and 21) are arranged adjacent to one another.

**Revendications**

1. Boîte de vitesses à engrenages du type à arbre intermédiaire pour véhicules automobiles, comprenant un arbre principal (2) coaxial à l'arbre d'entrée (1) et un frein ralentisseur (3) dont l'arbre d'attaque (5) qui est centré par rapport à l'axe de rotation du frein (4-4) est en liaison cinématique avec l'arbre principal (2) par l'intermédiaire d'une prise de force (6) possédant un train épicycloïdal (7), et dans lequel l'une des roues planétaires (8) du train épicycloïdal (7) de la prise de force (6) est solidaire du carter non rotatif (9) et l'autre roue planétaire (10) est reliée à l'arbre d'attaque (5) du frein ralentisseur (3), cependant que le porte-satellites (11) est en liaison cinématique avec l'arbre principal (2),
caractérisée
en ce que l'axe de rotation (4-4) du hein est coaxial à l'axe de rotation (4-4) de l'arbre principal (2) et le frein ralentisseur (3), avec le train épicycloïdal (7) de la prise de force (6), est interposé entre une boîte principale (13) qui comprend l'arbre d'entrée (1) en qualité d'entrée de la boîte de vitesses, au moins un arbre intermédiaire (12) et l'arbre principal (2) en qualité de sortie de boîte, d'une part, et une boîte additionnelle (15) du type épicycloïdal intercalée dans le flux de transmission de la force en série entre l'arbre principal (2) et un arbre de sortie (14) coaxial à ce dernier, d'autre part, en ce qu'il est prévu une liaison cinématique solidaire en rotation (19) entre le porte-satellites (11) du train épicycloïdal (7) de la prise de force (6) et le porte-satellites (16) de la boîte additionnelle (15), et en ce qu'un arbre creux (5 ou 18) traversé par l'arbre principal (2) est utilisé comme liaison entre une roue planétaire (10 ou 8) du train épicycloïdal (7) de la prise de force (6) et le frein ralentisseur (3).

2. Boîte de vitesses à engrenages selon la revendication 1,
caractérisée
en ce que les porte-satellites (11 et 16) de la prise de force (6) et de la boîte additionnelle (15) présentent des tourillons communs (19) sur lesquels les satellites (20 et 21) respectifs des deux trains sont montés en juxtaposition.